(19) Europäisches Patentamt
European Patent Office
Office européen des brevets

(11) **EP 2 233 787 A1**

(12) **EUROPEAN PATENT APPLICATION**

(43) Date of publication:
**29.09.2010 Bulletin 2010/39**

(51) Int Cl.:
***F16H 7/14*** *(2006.01)*

(21) Application number: **09382035.5**

(22) Date of filing: **23.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(71) Applicant: **Universidad Carlos III De Madrid**<br>**28918 Leganés - Madrid (ES)**<br><br>(72) Inventors:<br>• **Pabón, Luis Alberto**<br>**28918 Leganés - Madrid (ES)** | • **Balaguer Bernaldo de Quirós, Carlos**<br>**28918 Leganés - Madrid (ES)**<br>• **Jardon Huete, Alberto**<br>**28607 El Alamo (Madrid) (ES)**<br><br>(74) Representative: **ABG Patentes, S.L.**<br>**Avenida de Burgos 16D**<br>**Edificio Euromor**<br>**28036 Madrid (ES)** |

(54) **Adjustment mechanism of the pretensioning force in belt-pulley transmission system**

(57) Simple and compact mechanism which allows tightening belts which transmit power from a drive shaft (11) to a follow-up shaft (12). This mechanism provides means for varying and fixing the distance between the drive shaft (11) and the follow-up shaft (12) maintaining them substantially parallel. The use of the proposed mechanism does not have losses due to the contact with an additional tightening element and a similar traction torque is obtained in two rotation directions which make it possible to accurately graduate the tension.

FIG. 1

EP 2 233 787 A1

## Description

## Technical Field

The present invention proposes an adjustment mechanism for tightening the belts of loss-free belt-pulley transmission systems. The field of application comprises the mechanisms which use the belt-pulley system as method of power transmission, and particularly those transmission mechanisms that are used in robotic systems.

## State of the art

Belt transmissions are widely used in motor driven mechanisms, since they have multiple advantages when they function correctly. These mechanisms transmit power between separate parallel shafts and make it possible to obtain small values of reduction in transmission between the drive shaft and the follow-up shaft. They also act as physical separator between the low power layer and the high power layer, they have smooth and silent operation and they are used as a mechanical fuse due to the fact they have a transmission load limit which, if exceeded, causes the slipping between the belt and the pulley.

It should be borne in mind that the belt assembly tension, called pretensioning force, conditions the life of the belt, the load on the shafts, the noise level and the effective power transmission, also ensuring the correct gearing of the teeth of the belt in the follower pulley. A value of the pretensioning force which may be suitable is that which causes the least vibrations in the free side or less tightening. This value may depend on the maximum tangential force, the length and rigidity of the belt, the number of transmission teeth and/or the geometry of the actuation system.

Furthermore, belts are flexible elements which lengthen with use and which cannot tighten to the extreme since they would not transmit torque efficiently and they would be overloaded radially to the shafts.

Together with these previous considerations, various effects make an adjustment of the pretensioning force necessary. When the belt has insufficient pretensioning and the pulleys rotate very quickly with a low load, there is a tendency for the belt teeth to mount on top of the pulley teeth (in the driven side), in addition to wear in the flanks due to friction during the gearing of the teeth. If the belt rotates very slowly but with high loads, it may be the case that the grip between the teeth is not sufficient to transmit the necessary torque, and therefore the belt teeth disengage from the pulley teeth by the traction side. However, if the pretensioning force is excessive, it will increase the load on the shafts, reducing the effective power to transmit and there will be premature wear of the belt tooth, so that the motor is greatly affected.

In consequence, so that the belt transmission has the aforementioned virtues during its operation, a good tightening mechanism should have very precise measurements of the distance between the shafts and the pulley diameters, according to the belt size. This is something difficult to achieve, due to the accumulation of all the tolerances which are carried and accumulated during the construction of the mechanical systems.

For said reason it is common to use tightening mechanisms, which absorb these precision errors tightening the belt. However, the most widely used tighteners to date use a mechanisms which tightens the belt by the direct contact of a disc or a wheel with the belt. This element is generally graduated by screws or springs. Screw-graduated mechanisms are mechanisms complicated to graduate, and they become misaligned very easily; spring-graduated mechanisms lose pressure with use, losing their functionality.

Another drawback, and highly problematic in terms of robotics, is that the contact tighteners make the transmission asymmetric, i.e. under the same load, the motor needs different torque to rotate to the right than to rotate to the left, since there is an additional element in one of the transmission sides, which makes a robust control difficult in the joints of any automated or robotic system. In general, it is common to find faults after a period of use in these tightening mechanisms.

Furthermore, these mechanisms have additional elements that may increase the weight of a transmission system, for which reason they have drawbacks when applied to the field of robotics, where the weight of the transmission systems should be minimized as far as possible.

## SUMMARY OF THE INVENTION

The object of the invention is to resolve the problems to adjust the pretensioning force which prevents making use of all the advantages of a belt transmission system, as well as minimizing the losses in the transmission system due to the use of external elements and the asymmetric distribution of the transmission. These and other problems are resolved in the present invention by a mechanism for pretensioning the belts of the belt-pulley transmission system according to independent claim 1. In a second inventive aspect it claims a belt-pulley transmission system capable of adjusting the pretensioning force according to independent claim 13. In a third aspect a method is provided according to independent claim 14. Furthermore, other aspects of the invention and particularly advantageous embodiments thereof are described in the dependent claims.

In a first aspect, the present invention provides an adjustment mechanism of the pretensioning force in belt-pulley transmission systems that make it possible to regulate the distance between the drive shaft and the follow-up shaft. In this context regulating the distance is understood as the action which comprises varying the distance between the drive shaft and the follow-up shaft and fixing this distance. This regulation of the distance provides a precise and reliable variation of the distance between the pulleys associated to the drive and follow-up shafts. The resulting pretensioning force on the belt is symmetrical with respect to the rotation directions and does not have losses in the torque transmission belts, since there are no external elements such as the tighteners, and the motor torque losses are avoided due to the friction of elements such as the tighteners on the belt.

This invention achieves pretensioning in a controlled manner the drive belt without using a mechanism such as an external tightener to provide a pretensioning load on the belt, since it regulates the distance between the drive shaft and the follow-up shaft. In order to regulate the distance between these two shafts, the invention provides constraining or guide means of the movement of both shafts so that the distance between them is varied whilst said shafts are maintained parallel.

The movement of one shaft with respect to another is constrained by guiding means which comprise two parts: a first moving part which moves on a second fixed part and which is integral with to a first shaft, which may be the drive shaft or the follow-up shaft. When both parts are moved the distance changes between the first shaft and the second shaft, so that the distance between both shafts is regulated with precision, avoiding an asymmetric distribution of the torque to rotate right to left or left to right.

In one embodiment, the movement of the moving part of said guiding means is determined by the cooperation between the fixed part and the moving part. This cooperation forces a trajectory of the constrained moving part on at least part of the circumference, around whose axis (spin axis) rotates one of the shafts giving rise to a relative movement of this first spin axis with respect to the second shaft. Whilst the spin axis of this first shaft does not coincide with the second shaft (they are eccentric), the distance $T$ between the first shaft and the second shaft changes on varying the position of the second moving part in the circumference in accordance with:

- the distance of the first rotation shaft to the spin axis, $R$;
- the distance of the spin axis to the second shaft, $C$; and
- the angle $\beta$ subtended between the lines which joins the drive shaft to the spin axis and the follow-up shaft with the spin axis.

If, furthermore, $C$ and $R$ have a constant value, the minimum variation of the distance $T$ between the first shaft and the second shaft is given by the difference between the angular spacing of both.

Even though $C$ and $R$ are constant, $C$ should not necessarily be equal to $R$, since their values will depend on the precision with which it is aimed to control the variation in the belt length. If $C$ is equal to $R$, even though the variation in the length of the belt is not very fine belts can be used with a wider range of values. In contrast, if $C$ and $R$ are of different values, without it mattering which is the larger, as the difference between these values increases, it is allowed that the variation in lengths $T$ is finer, although the ranges of possible belts that can be used is less.

Furthermore, in one embodiment, the distance between the different positions of the moving part varies at discrete intervals where fixing means are provided. In a preferred embodiment, the guide has a set of perforations or holes in the fixed part and in the moving part. Preferably, these holes may be found at a substantially fixed distance. Furthermore, it is possible to provide that the distance between the holes of the fixed part and the distance between the holes of the moving part is different This makes it possible to regulate the distance between shafts with adjustable precision. Furthermore, it is possible to provide substantially equidistant $N$ holes in the moving part and in the fixed part, $n$ holes substantially equidistant. Preferably, the number $n$ is equal to $N \pm 1$. When holes are used, it is possible to use fixing means, which avoids relative movement of the parts when the belt has been tightened.

In a second inventive aspect, these characteristics of the adjustment mechanism of the pretensioning force make a transmission system according to claim 13 possible, which not only requires less maintenance but also combines the previous effect with less weight, which provides advantages in its application, particularly to robotic systems. Furthermore, not only is it susceptible of having a lower manufacturing cost but it permits regulating the pretensioning force of the belt in a simpler manner with a precision that is variable and adjustable.

In a third inventive aspect it provides a method to adjust the distance between the two shafts. It is possible, using any of the aforementioned possibilities, to position a belt between the drive shaft and the follow-up shaft. This belt may be in a relaxed state, when a pretensioning force is not exerted thereon, or tense, when this force is different from zero. In any case, if one wants to adjust this pretensioning force, the distance is changed between the drive and follow-up shafts using the means of regulating the distance between shafts whilst the drive shaft and the follow-up shaft are maintained parallel to one another. Once the desired pretensioning value is achieved for the traction system, it is possible to fix said positions of the drive shaft and follow-up shaft.

Depending on the embodiment of the invention chosen among those previously stated, it is possible to carry out said regulation with variants conditioned by the characteristics present in the invention stated above. Thus, in one embodiment, this regulation is carried out either by moving the drive shaft or the follow-up shaft through the trajectory determined by the guiding means. Preferably, the position of a moving part of these guiding means with respect to the fixed part will be varied. In a preferred embodiment, the variation of this movement gives a circular trajectory on a spin axis.

Furthermore, it would be possible, in accordance with the aforementioned, to fix the position of the moving part and the fixed part, so that it fixes, at the same time, a distance between the pulleys of the drive shaft and the follow-up shaft and establishes a suitable pretensioning force. These stages will comprise steps wherein the variation of the distance between shafts $T$ is adjusted with the aid of two sets of perforations or holes disposed in the moving part and in the fixed part. This variation could also be variable with a precision in the adjustment which is sufficiently fine in accordance with the distance between both sets of holes.

Thus, a method of adjustment would comprise a first step wherein the fixed part would move until making the holes of the fixed part and the moving part coincide so that a pretensioning force is provided closer to the desired pretensioning force. In a later step it may be possible to fix the positions of these shafts by a fixing means, which in a preferred variant is a pin or a screw.

In addition to the discrete methods of adjustment of the tightener, there is the possibility of adjusting it continuously by the inclusion of a passive elastic element, such as, for example, a spring with constant elastics calculated to maintain the belt at a constant tension. In other words, in the event of lengthening (due to use or stretching because of operating tension) of part of the belt, there would be an extra force given by the spring, which it would place the tightener in a new position of balance maintaining its tension.

In another embodiment, said regulation is carried out automatically by a sensor which detects the coincidence between both holes by varying the positions of the fixed part and the moving part, so that this displacement is detected using a means of detection such as an optical means, and then the fixing between both parts is carried out.

**BRIEF DESCRIPTION OF THE FIGURES**

For a better understanding of the invention, its objects and advantages, the following figures are attached to the specification wherein the following is represented:

Fig. 1 shows a sectional view of a preferred embodiment of the invention;

Fig. 2 shows the distance between shafts and the variation in the distance between shafts in accordance with the angle β;

Fig. 3 shows another embodiment of the invention;

Fig. 4 shows embodiments of mechanisms of variation in the distance.

**EMBODIMENTS OF THE INVENTION**

The embodiments of the adjustment mechanism of the pretensioning force for belt-pulley power transmission systems comprise a belt which joins a pulley joined to a drive shaft 11 and another pulley joined to a follow-up shaft 12, and means of regulation of the distance between these two shafts 11,12.

In a first embodiment, the loss-free belt tension mechanism of the invention regulates the distance between the drive shaft 11 and the follow-up shaft 12 by means of a joint which comprises a fixed part 15 whereon a moving part 16 integral with to the motor bearer plates 13 rotates around a spin axis 17.

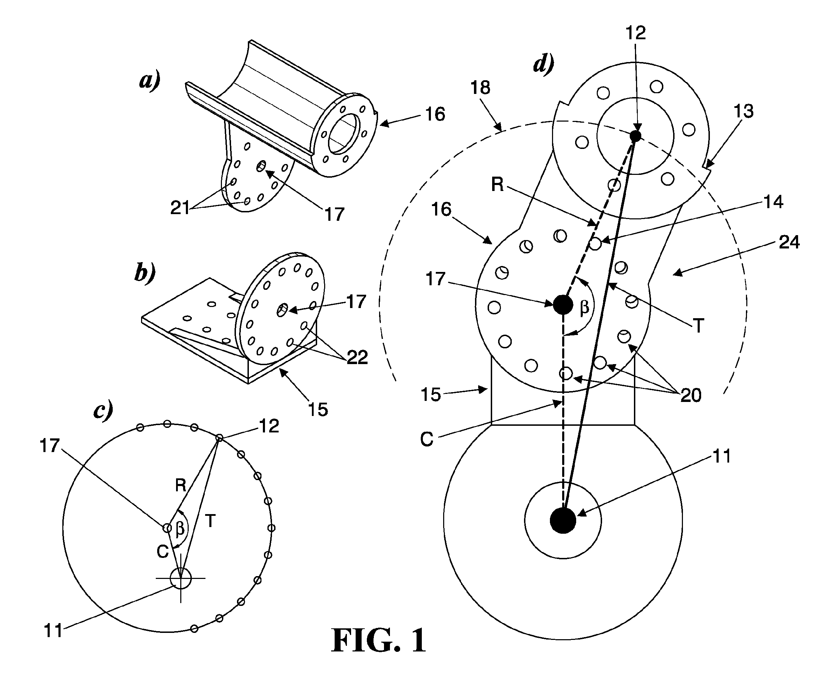

Although, in general, either of the two shafts can be considered as fixed and moving shaft, in this first variant the first fixed shaft is the follow-up shaft 11 and the second moving shaft is the drive shaft 12 as illustrated in figure 1. A motor housed in the bearer plates 13 actuates a drive shaft which rotates around the spin axis 17 of the joint, which forms the guiding means 24, describing a circumference 18 of radius $R$. The distance of the spin axis 17 from the joint to the follow-up shaft 11 is $C$.

A moving part 16, with $N$ holes 21 in the perimeter of a circumference of a diameter $d$, is joined to a fixed part 15, of $n$ holes 20 in the perimeter of its respective circumference of diameter $d$, and in particular, $N=n-1$. Both circumferences are concentric and allow the rotation of the moving part 16 around the spin axis 17, which permits the relative circular movement between both fixed 15 and moving 16 parts. The value of the distance $T$ from the drive shaft 12 to the follow-up shaft 11 is variable and depends on the angle β, which is the angle between line $C$ and line $R$ in Fig.1.

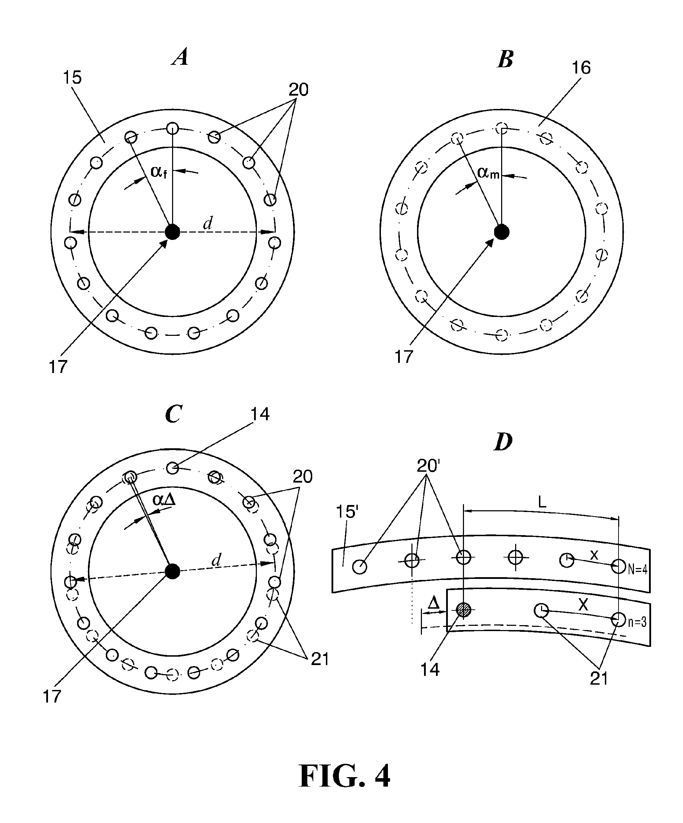

The method of regulation of the distance $T$, which is represented in figures 4a-c, depends on the angular spacing of the holes 20, 21 around a circumference (360º). In this embodiment, both holes 20, 21 are regularly distributed around said circumference of diameter $d$, the value of both angular spacings being $\alpha_f = 360º/n$, $\alpha_m = 360º/N$. The minimum variation in relative movement between the fixed part 15 and the moving part 16, is given by the difference between the angular spacing of the holes 20 of the fixed part and the holes 21 of the moving part:

$$\Delta\alpha = |\alpha_f - \alpha_m|.$$

In each position of the mechanism only one of the holes 20 of the fixed part 15 coincides with one of the holes 21 of the moving part 16, hereinafter holes 14, using fixing means 14 (not shown) in these coincident holes which avoids the relative movement between them. Advantageously, in this embodiment these fixing means may be a screw or pin between both parts through the coincident holes 14.

In an example of embodiment the number of holes 20,21 is $n$ = 12 and $N$=13.

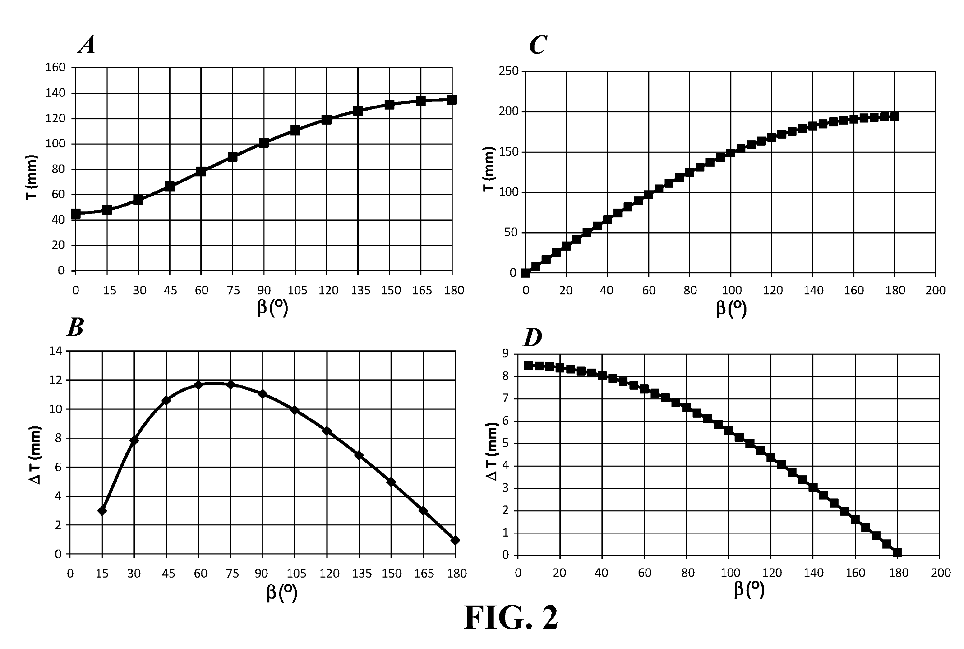

In another example of embodiment $R$=90 mm $C$ =45 mm. Figure 2a has represented the values of $T$ in accordance with β, left, and in Fig. 2b, the variation in the distance of *T* in accordance with the angle. This last variation is not constant, it decreases as it approximates 180º, which makes it possible to obtain different adjustment values in accordance with said angle and obtain greater precision in the pretensioning of the belt.

In another example of embodiment *R=C=*97 mm. Figure 2c represents the values of *T* in accordance with β, and in Fig. 2d, the variation of distance of *T* in accordance with the angle β.

In a second embodiment a belt tightening mechanism is considered which regulates the distance between the drive shaft 11 and the follow-up shaft 12 by means of a grooved fixed part 15' whereon a moving part 16' integral with to the bearer plates 13 of the motor can move in guided manner.

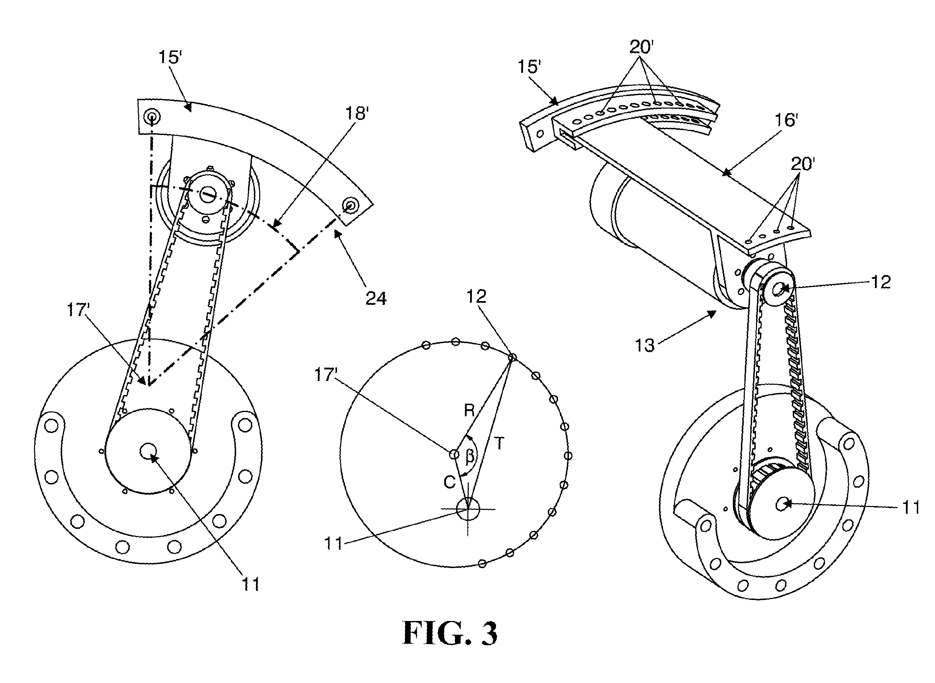

Although as in the previous embodiment it is possible to consider, in general, either of the two shafts, it is considered that the first fixed shaft is the follow-up shaft 11 and the second moving shaft is the drive shaft 12, as shown in Fig. 3. The motor housed in the bearer plates 13, which actuates the drive shaft 12, is integral with to a moving part 16' of the guiding means 24'. Said moving part moves through a fixed part 15' which constrain the movement of said moving part 16' to an arc of circumference 18' of radius *R* around the spin axis 17'. Although the distance of the spin axis 17' to the follow-up shaft 11,*C* is maintained constant when varying the position of the drive shaft 12, the distance *T* changes in accordance with the angle β, which is the angle between line *C* and line *R.*

The moving part 16' comprises *N* holes 21' in the perimeter of the arc of circumference which moves on the fixed part 15'. This fixed part 15' also comprises *n* holes 20' in its perimeter, and in particular, *N=n-*1. Both arcs correspond to a circumference of diameter *d* and allow a relative movement between both fixed 15' and moving 16' pieces.

The method for regulating the distance *T*, as shown in Fig. 4d, now depends on the length *L* of the arc of the circumference 18. In this embodiment, both sets of holes 20' and 21' are regularly distributed around each one of the parts, said length being *x=L/(N-*1) for the fixed part 15 and *X=L/(n-*1) for the moving part 16'. Furthermore, in this embodiment *x < X*. The minimum variation of relative movement between the fixed part 15' and the moving part 16' is given by the difference Δ between the spacing of the holes of the fixed part 20' and the moving part 21':

$$\Delta = X - x.$$

In each position of the mechanism any one of the holes 20' of the fixed part 15' coincides with one of the holes 21' of the moving part 16', hereinafter 14', using fixing means (not shown) in these coincident holes 14' which avoids the relative movement between them. Advantageously, in this embodiment these fixing means may be a screw or pin between both parts through the coincident holes 14'.

## Claims

1. Adjustment mechanism of the pretensioning force for power transmission systems between pulleys using a belt, wherein the transmission system comprises:

   - a belt;
   - a drive shaft (11) which comprises a first pulley; and
   - a follow-up shaft (12) which comprises a second pulley;

   wherein the drive shaft (11) and the follow-up shaft (12) are substantially parallel, said mechanism being **characterized in that** it comprises means of regulation of the distance between these two shafts.

2. Mechanism according to the preceding claim, wherein the means of regulation of the distance between the drive shaft (11) and the follow-up shaft (12) comprises:

   - constraining or guiding means of the position of at least one of the shafts; and
   - fixing means which maintains the distance between the drive shaft (11) and the follow-up shaft (12) fixed.

3. Mechanism according to the preceding claim, wherein the guiding means comprises a fixed part (15, 15') and a moving part (16, 16') integral with either to the follow-up shaft (12) or to the drive shaft (11).

4. Mechanism according to the preceding claim, wherein the moving part (16') moves along a fixed part (15') giving a curved or straight trajectory.

5. Mechanism according to the preceding claim, wherein the guiding means constrains the movement of the moving part (16, 16') at a rotation around a third spin axis (17, 17'), parallel to the drive shaft (11) and to the follow-up shaft, wherein the spin axis (17, 17') does not coincide with the drive shaft (11) or with the follow-up shaft (12).

6. Mechanism according to any of claims 3-5, wherein the fixed part (15, 15') comprises fixing means to fix the moving part (16, 16') in at least two different positions.

7. Mechanism according to the preceding claim, wherein the distance between the positions to fix the distance between the moving part (16, 16') and the fixed part (15, 15') is substantially regular.

8. Mechanism according to claim 6, wherein the fixed part (15') is a substantially circular groove whose centre corresponds to the spin axis and the moving part (16') moves along said groove.

9. Mechanism according to the preceding claim, wherein

- The fixed part (15') comprises $N$ holes situated in an arc of circumference centred in the spin axis spaced at substantially regular distance $x$ on said arc of circumference (18'), and
- the moving part (16') comprises $n$ holes situated in an arc of circumference centred in the spin axis spaced at substantially regular distance $X$ on said arc of circumference,

the distance between holes of the fixed part (15') being substantially different to the distance between holes of the moving part (16').

10. Regulation mechanism according to claim 6, wherein

- the fixed part (15) comprises $n$ holes (20) situated in a circumference centred in the spin axis with a substantially regular angular spacing, and
- the moving part (16) comprises $N$ holes (21) situated in a circumference centred in the spin axis with a substantially regular angular spacing,

the number of holes of the fixed part (15) being different from that of the moving part (16).

11. Regulation mechanism according to the preceding claim, wherein the number of holes of the fixed part (15, 15') and of the moving part (16, 16') differ by one unit.

12. Regulation mechanism according to claim 6, wherein the fixing means is a pin or a screw which is introduced through the coincident hole (14, 14').

13. Power transmission system between pulleys using a belt which comprises:

- a belt;
- a drive shaft (11) which comprises a first pulley;
- a follow-up shaft (12) which comprises a second pulley parallel to the drive shaft (11); and
- an adjustment mechanism of the pretensioning force according to any of the preceding claims.

14. Method to adjust the pretensioning force of a transmission system between pulleys using a belt which comprises the steps of:

- Providing a belt between the pulleys of the drive shaft (11) and follow-up shaft (12) in a state wherein no pretensioning forces act.
- Varying the distance between the drive shaft (11) and the follow-up shaft (12) until obtaining a desired pretensioning force via an adjustment mechanism according to any of claims 1-12.
- Fixing the distance between the drive shaft (11) and the follow-up shaft (12).

15. Method to adjust the pretensioning force of a transmission system between pulleys according to the preceding claim, wherein the variation in the distance between the drive shaft (11) and the follow-up shaft (12) is constrained to a rotation movement of the drive shaft (11) around a third spin axis (17, 17'), parallel to the drive shaft (11) and to the follow-up shaft, wherein the spin axis (17, 17') does not coincide with the drive shaft (11) or with the follow-up shaft (12).

a)

b)

c)

d)

**FIG. 1**

EP 2 233 787 A1

FIG. 2

FIG. 3

FIG. 4

Europäisches
Patentamt

European
Patent Office

Office européen
des brevets

**EUROPEAN SEARCH REPORT**

Application Number

EP 09 38 2035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/101771 A (BROSE FAHRZEUGTEILE [DE]; PORTNER STEFAN [DE]) 28 August 2008 (2008-08-28) | 1-6,8,9, 12-15 | INV. F16H7/14 |
| Y | * pages 4,5; figures 1-4 * | 10,11 | |
| X | US 2 691 553 A (PETTIGREW SYDNEY E) 12 October 1954 (1954-10-12) * figures 1,2 * | 1-7, 12-15 | |
| X | US 2004/033852 A1 (TAOMO TOSHIO [JP] ET AL TAOMO TOSHIO [JP] ET AL) 19 February 2004 (2004-02-19) * figures 1,2 * | 1-6,8, 12-15 | |
| X | US 3 274 841 A (ROBERTS JOHN W) 27 September 1966 (1966-09-27) * figures 1,3,5 * | 1,13 | |
| Y | US 276 292 A (JAMES M. SEYMOUR) 24 April 1883 (1883-04-24) | 10,11 | |
| A | * page 1, lines 45-54; figures 1,3 * | 1 | TECHNICAL FIELDS SEARCHED (IPC) |
| A | GB 657 784 A (POESCHL RUDOLF; WILHELM POESCHL) 26 September 1951 (1951-09-26) * page 3, lines 102-119 * | 1,10,11 | F16H |

The present search report has been drawn up for all claims

| Place of search | Date of completion of the search | Examiner |
|---|---|---|
| The Hague | 11 September 2009 | Bourgoin, J |

EPO FORM 1503 03.82 (P04C01)

**ANNEX TO THE EUROPEAN SEARCH REPORT
ON EUROPEAN PATENT APPLICATION NO.**

EP 09 38 2035

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2009

| Patent document cited in search report | | Publication date | Patent family member(s) | | Publication date |
|---|---|---|---|---|---|
| WO 2008101771 | A | 28-08-2008 | DE 102007008246 | A1 | 15-01-2009 |
| US 2691553 | A | 12-10-1954 | NONE | | |
| US 2004033852 | A1 | 19-02-2004 | JP 3805290 | B2 | 02-08-2006 |
| | | | JP 2004076832 | A | 11-03-2004 |
| US 3274841 | A | 27-09-1966 | NONE | | |
| US 276292 | A | | NONE | | |
| GB 657784 | A | 26-09-1951 | NONE | | |

EPO FORM P0459

For more details about this annex : see Official Journal of the European Patent Office, No. 12/82